# EUROPÄISCHE PATENTSCHRIFT

(11) **EP 3 728 761 B1**
(45) Veröffentlichungstag und Bekanntmachung des Hinweises auf die Patenterteilung: **22.11.2023**
(21) Anmeldenummer: 18836248.7
(22) Anmeldetag: 21.12.2018
(51) Int. Cl.: E04G 21/04, B66C 23/00, B66C 23/68, F15B 15/06, F15B 15/28

(54) **GROSSMANIPULATOR MIT EINEM HYDRAULISCHEN DREHANTRIEB**
MANIPULATOR WITH HYDRAULIC ROTARY DRIVE
MANIPULATEUR AVEC MECANISME D'ENTRAINEMENT EN ROTATION

(30) Priorität: 22.12.2017 AT 510822017
(43) Veröffentlichungstag der Anmeldung: 28.10.2020
(73) Patentinhaber: Schwing GmbH, 9431 St. Stefan im Lavanttal (AT)
(72) Erfinder: EDLER, Jörg, 8580 Köflach (AT); KRIEGL, Daniel, 8582 Rosenthal a.d.K. (AT); ULBING, Manuel Josef, 8010 Graz (AT)
(74) Vertreter: Schneiders & Behrendt Bochum
(86) Internationale Anmeldenummer: PCT/EP2018/086461
(87) Internationale Veröffentlichungsnummer: WO 2019/122280

(56) Entgegenhaltungen:
- EP-B1- 2 776 360
- WO-A1-2016/181700
- FR-A1- 2 907 869
- US-A1- 2015 299 986

## Beschreibung

Die Erfindung betrifft einen Großmanipulator mit einem Knickmast, der zwei oder mehr Mastarme umfasst, wobei die Mastarme über Knickgelenke mit dem jeweils benachbarten Mastarm mittels je eines Antriebs schwenkbeweglich verbunden sind, wobei wenigstens einer der Antriebe als hydraulischer Drehantrieb ausgebildet ist, mit einem ersten, als Welle ausgebildeten Drehantriebselement, wenigstens zwei mit dem ersten Drehantriebselement drehfest verbundenen und an dem ersten Drehantriebselement zwischen jeweils zwei Endlagen entlang eines Schiebeweges durch Beaufschlagung mit einem Hydraulikfluid axial beweglichen Ringkolben, wobei jeder Ringkolben zwei voneinander weg gerichtete, ringförmige Stirnverzahnungen aufweist, einem zweiten Drehantriebselement mit zu den Stirnverzahnungen der Ringkolben komplementären Ringverzahnungen, wobei die Stirnverzahnungen der Ringkolben mit den zugehörigen Ringverzahnungen des zweiten Drehantriebselements durch Bewegen der Ringkolben an dem ersten Drehantriebselement in Eingriff und außer Eingriff bringbar sind, wodurch eine Drehbewegung des zweiten Drehantriebselements relativ zum ersten Drehantriebselement entsteht, und einer Steuereinheit, die die Beaufschlagung der Ringkolben mit dem Hydraulikfluid steuert, wobei die Steuereinheit eingerichtet ist, eine hin und her gehende Bewegungen der Ringkolben auf der Welle nach Maßgabe eines Bedienungssignals zu bewirken. Außerdem betrifft die Erfindung eine Autobetonpumpe mit einem solchen Großmanipulator.

Die US 2015/299986 A1 offenbart eine Hubbetriebskalibrierungs-Steuereinrichtung für einen Hydraulikzylinder und ein Hubbetriebskalibrierungs-Steuerverfahren für einen Hydraulikzylinder.

Ein oben genannter Drehantrieb ist bei dem in EP 2 776 360 B1 offenbarten Großmanipulator nach dem Oberbegriff des Anspruchs 1 bekannt. Zur Steuerung des hier beschriebenen Antriebes wird eine mechanische Steuerung mittels einer Steuerscheibe vorgeschlagen, welche die Schaltimpulse für die Hydraulikventile für die Zufuhr der Hydraulikflüssigkeit zu den beiden Ringkolben steuert. Eine solche mechanische Steuerung ist nachteilig, da diese die Umschaltphase nicht so genau steuern kann, dass die Eingriffsstellung der miteinander zusammenwirkenden Stirnverzahnungen zuverlässig eingestellt werden kann. Dies kann einerseits zu einem zu frühen Eingriff der Zähne und damit einer Kraftübertragung an den Zahnspitzen führen, obwohl die Zahnspitzen nicht geeignet sind, entsprechend hohe wirkende Kräfte zu übertragen andererseits ist der Zeitpunkt der Lastübergabe zwischen den Ringkolben nicht eindeutig definiert, wodurch die Gleichförmigkeit der Drehbewegung, insbesondere unter Last, nur schwer zu erreichen ist.

Vor diesem Hintergrund ist es Aufgabe der Erfindung, einen Großmanipulator mit verbessertem Drehantrieb bereitzustellen, der eine verbesserte Steuerungsmöglichkeit der hin und her gehenden Bewegungen der Ringkolben durch Beaufschlagung der Ringkolben mit dem Hydraulikfluid bietet. Insbesondere soll die Gleichförmigkeit der Drehbewegung verbessert werden und Schäden an den Zahnspitzen der Stirnverzahnungen der Ringkolben und der komplementären Ringverzahnungen sollen vermieden werden.

Diese Aufgabe löst die Erfindung ausgehend von einem Großmanipulator nach Anspruch 1. Der Grossmanipulator umfasst eine mit der Steuereinheit verbundene Sensoranordnung zur Erfassung der Positionen der Ringkolben entlang des jeweiligen Schiebeweges. Mit der genauen Erfassung der Position der Ringkolben entlang des jeweiligen Schiebeweges kann die Steuereinheit die Beaufschlagung der Ringkolben mit Hydraulikfluid, und damit auch deren Geschwindigkeit, gezielter steuern, um eine geregelte hin und her gehende Bewegung der Ringkolben auf der Welle zu erzeugen, wodurch die Gleichförmigkeit der Drehbewegung des Drehantriebes verbessert und auch Schäden an den Zahnspitzen der Stirnverzahnungen, an den Ringkolben und der komplementären Ringverzahnungen verhindert werden.

Erfindungsgemäß ist vorgesehen, dass die Steuereinheit die Geschwindigkeit der Ringkolben abhängig von den Signalen der Sensoranordnung regelt. Mit einer derart ausgeführten Steuereinheit kann insbesondere die Umschaltphase der hin und her gehenden Bewegung der Ringkolben genau geregelt werden, sodass bei der Übergabe der Last die Belastung an den Zahnspitzen der Ringverzahnungen und der Stirnverzahnungen verringert wird und die Geschwindigkeit der beiden Ringkolben zueinander so eingestellt werden kann, dass eine definierte Lastübergabe stattfindet, die die Gleichförmigkeit der Drehbewegung des Antriebes gewährleistet. Mit der erfindungsgemäßen Regelung der Geschwindigkeit der Ringkolben lassen sich zudem definierte Positionen der Ringkolben zum jeweils richtigen Zeitpunkt einstellen, um das Lastübergabeverhalten zwischen den Verzahnungen weiter zu verbessern.

Erfindungsgemäß ist vorgesehen, dass das zweite Drehantriebselement als Zylindergehäuse ausgebildet ist, wobei die Ringkolben auf der Welle zwischen den jeweils zwei Endlagen entlang des Schiebeweges durch Beaufschlagung mit dem Hydraulikfluid axial beweglich sind.

Ein derartig ausgestalteter Großmanipulator kann durch einen Knickmast mit einem solchen Drehantrieb besonders flexibel verschwenkt werden, sodass der Knickmast in sehr spezielle Ausfaltungsformen gebracht werden kann. Dies macht seinen Einsatz flexibel. Der speziell ausgestaltete Drehantrieb bietet zudem eine hohe Lebensdauer und geringen Verschleiß.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass die Sensoranordnung dazu ausgebildet ist, die Positionen der Ringkolben bei Erreichen der jeweiligen Endlage zu erfassen. Mit der Erfassung der Ringkolbenposition bei Erreichen der jeweiligen Endlage ist eine einfache Möglichkeit gegeben mit der Sensoranordnung die Position der Ringkolben entlang des Schiebeweges zumindest in der Endlage zu erfassen, wodurch die Steuereinheit in die Lage versetzt werden kann, die Umschaltphase für eine hin und her gehende Bewegung der Ringkolben zu steuern.

Eine vorteilhafte Ausführung ist, dass die Sensoranordnung mindestens einen Schalter umfasst, der bei Erreichen einer vorbestimmten Position des jeweiligen Ringkolbens schaltet. Mit einem einfachen Schalter lässt sich das Erreichen des Kolbens an einer vorbestimmten Position zuverlässig erfassen, sodass die Steuereinrichtung die Umschaltphase durch Beaufschlagung der Ringkolben mit dem Hydraulikfluid gezielt einleiten kann.

Eine bevorzugte Ausführung sieht vor, dass der Schalter als induktiv schaltender Endlagenschalter ausgebildet ist. Mit einem induktiv schaltenden Endlagenschalter ist eine zuverlässige und verschleißarme Möglichkeit gegeben die Lage der Ringkolben entlang des Schiebeweges bei Erreichen einer vorbestimmten Position zu erfassen.

In einer weiter bevorzugten Variante ist vorgesehen, dass die Sensoranordnung mindestens einen Wegsensor umfasst, der die momentane Position mindestens eines Ringkolbens entlang des Schiebeweges erfasst. Mit der Erfassung der momentanen Position mindestens eines Ringkolbens über einen Wegsensor kann insbesondere die Geschwindigkeit der hin und her gehenden Bewegung der Ringkolben an dem ersten Drehantriebselement durch die Steuereinheit besonders genau eingestellt werden, da die Beaufschlagung der Ringkolben mit dem Hydraulikfluid abhängig von der momentanen Position des Ringkolbens entlang des Schiebeweges erfolgen kann. Hierdurch lässt sich die Geschwindigkeit der Kolbenbewegung über die gesamte Position jedes Ringkolbens regeln, so dass insbesondere der Lastübergang von einem zum anderen Ringkolben durch unterschiedliche Kolbengeschwindigkeiten definiert werden kann, wodurch die Gleichförmigkeit der Drehbewegung erheblich verbessert wird.

Besonders vorteilhaft ist die Weiterbildung, dass der Wegsensor induktiv erfassend ausgebildet ist. Mit einem induktiv erfassenden Wegsensor ist eine besonders verschleißarme Möglichkeit gegeben, die momentane Position des Ringkolbens entlang des Schiebeweges zu erfassen.

Weiter vorteilhaft ist die Ausgestaltung, dass der Wegsensor kapazitiv erfassend ausgebildet ist. Mit einem kapazitiv erfassenden Wegsensor ist eine besonders verschleißarme und unempfindliche Möglichkeit gegeben, die momentane Position des Ringkolbens entlang des Schiebeweges zu erfassen.

Weiter vorteilhaft ist die Ausgestaltung, dass der Wegsensor eine gegenüber einem Drehantriebselement, vorzugsweise dem zweiten Drehantriebselement isolierte Ringelektrode aufweist, in die zumindest ein Abschnitt des von dem Wegsensor erfassten Ringkolbens bei Verschiebung entlang des Schiebeweges unterschiedlich tief eintaucht. Mit einer solchen gegenüber einem Drehantriebselement, vorzugsweise dem zweiten Drehantriebselement isolierten Ringelektrode lässt sich sehr einfach eine kapazitive Erfassung der momentanen Position des Ringkolbens sicherstellen. Dies geschieht indem zumindest ein Abschnitt des Ringkolbens bei Verschiebung entlang des Schiebeweges in die isolierte Ringelektrode unterschiedlich tief eintaucht. Je nach Eintauchttiefe des Abschnittes in den Bereich der Ringelektrode kann eine geänderte Kapazität an der Ringelektrode gemessen werden. Die Ringelektrode ist gegenüber einem Drehantriebselement, vorzugsweise dem zweiten Drehantriebselement, vorzugsweise durch einen Kunststoffring isoliert. Zwischen dem eintauchenden Abschnitt des Ringkolbens und der Ringelektrode kann zudem ein Luftspalt gebildet sein, der eine Isolierung der Ringelektrode vom eintauchenden Abschnitt bietet.

In einer weiter bevorzugten Variante ist vorgesehen, dass der Wegsensor einen Dehnungsmessstreifen umfasst, der ein von der momentanen Position des mindestens einen Ringkolbens entlang des Schiebeweges abhängiges Signal liefert. Mit einem Dehnungsmessstreifen kann die momentane Position mindestens eines Ringkolbens entlang des Schiebeweges besonders einfach erfasst werden. Vorzugsweise ist der Dehnungsmessstreifen auf einer vorgespannten Biegefeder montiert, die mit dem mindestens einen Ringkolben zur Erfassung seiner momentanen Position in Eingriff steht. Aufgrund der Vorspannung der Biegefeder kann diese mit dem Ringkolben in Eingriff bleiben.

Der Widerstand des Dehnungsmessstreifen ändert sich bei einer Veränderung der Biegung der Biegefeder, sodass sich die momentane Position des Ringkolbens entlang des Schiebeweges erfassen lässt. Die vorgespannte Biegefeder kann zum einen mit einem Ende an der Kolbenschulter des Ringkolbens angreifen oder auch in einer Nut am Kolben geführt werden.

Eine vorteilhafte Ausführungsform der Erfindung sieht vor, dass der Wegsensor außerhalb eines äußeren Drehantriebselements, vorzugsweise außerhalb des zweiten Drehantriebselements, angeordnet ist. Mit der Anordnung des Wegsensors außerhalb des äußeren Drehantriebselements kann ein einfach zugänglicher Wegsensor für die Sensoranordnung angegeben werden. Außerdem lässt sich das äußere Drehantriebselement durch Anordnung des Wegsensors außerhalb kleiner ausführen, sodass mehr Bauraum für die Ringkolben zur Verfügung steht.

Eine bevorzugte Ausführung sieht vor, dass der Wegsensor der Sensoranordnung in einem Zusatzgehäuse angeordnet ist, welches an der Außenseite des äußeren Drehantriebselements, vorzugsweise außerhalb des zweiten Drehantriebselements, angeordnet ist. Mit einem Zusatzgehäuse außerhalb des äußeren Drehantriebselements kann der Wegsensor geschützt und dennoch gut zugänglich angeordnet werden. Dies erleichtert Wartungsarbeiten und reduziert weiterhin Fehler durch äußere Einflüsse, wie Feuchtigkeit und Schmutz.

Weiter vorteilhaft ist die Ausgestaltung, dass der Wegsensor über eine Taststange die momentane Position des mindestens einen Ringkolbens entlang des Schiebeweges im äußeren Drehantriebselement, vorzugsweise im zweiten Drehantriebselement, erfasst, wobei die Taststange durch eine Durchführung in das äußere Drehantriebselement, vorzugsweise in das zweite Drehantriebselement, geführt ist. Mit der vorgeschlagenen Taststange, die durch die Durchführung in das äußere Drehantriebselement, vorzugsweise in das zweite Drehantriebselement, geführt ist, kann auf einfache Art und Weise die momentane Position des Ringkolbens entlang des Schiebeweges ertastet und außerhalb des äußeren Drehantriebselements, vorzugsweise außerhalb des zweiten Drehantriebselements, sensorisch erfasst werden.

Besonders vorteilhaft ist die Weiterbildung, dass die Taststange mit dem mindestens einen Ringkolben in Eingriff steht. Um die momentane Position des Ringkolbens über eine außerhalb des äußeren Drehantriebselements, vorzugsweise außerhalb des zweiten Drehantriebselements, angeordneten Wegsensor zuverlässig erfassen zu können, steht die Taststange mit dem Ringkolben in Eingriff. Die Taststange kann hierzu zum einen mit einem Ende an der Kolbenschulter des Ringkolbens angreifen oder auch in einer Nut am Kolben geführt werden.

Eine weitere bevorzugte Ausführung der Erfindung sieht vor, dass das Zylindergehäuse das äußere Drehantriebselement bildet.

Ferner ist Gegenstand der Erfindung eine Autobetonpumpe, wobei die bereits oben und im Folgenden näher beschriebene Autobetonpumpe einen, wie bereits oben und im Folgenden näher beschriebenen, eine Betonförderleitung tragenden Großmanipulator aufweist. Mit einem solchen Großmanipulator an einer Autobetonpumpe kann der Beton besonders einfach und flexibel auf der Baustelle verteilt werden.

Weitere Merkmale, Einzelheiten und Vorteile der Erfindung ergeben sich aufgrund der nachfolgenden Beschreibung sowie anhand der Zeichnungen. Ausführungsbeispiele der Erfindung sind in den folgenden Zeichnungen rein schematisch dargestellt und werden nachfolgend näher beschrieben. Einander entsprechende Gegenstände oder Elemente sind in allen Figuren mit den gleichen Bezugszeichen versehen. Es zeigen:
- Figur 1:: erfindungsgemäße Autobetonpumpe mit Großmanipulator,
- Figur 2:: Mastarm,
- Figur 3:: erfindungsgemäßer Drehantrieb,
- Figur 4:: Schnittansicht zu Drehantrieb,
- Figur 5:: Schnittansicht zu Drehantrieb mit Endlagenschaltern,
- Figur 6:: Schnittansicht zu Drehantrieb mit induktiv schaltenden Endlagenschaltern,
- Figur 7:: Explosionszeichnung zu Drehantrieb,
- Figur 8:: Seitenansicht zu Drehantrieb,
- Figur 9:: Drehantrieb mit Durchführungen in Zylindergehäuse,
- Figur 10:: Seitenansicht in Drehantrieb,
- Figur 11:: Schnittdarstellung durch Drehantrieb,
- Figur 12:: Detail in Schnittdarstellung,
- Figur 13:: Drehantrieb in Seitenansicht,
- Figur 14:: Hydraulikplan für die Ansteuerung von Drehantrieb,
- Figur 15:: Weg-Zeit Diagramm für Ansteuerung der Ringkolben,
- Figur 16:: Weg-Zeit- und Geschwindigkeitsdiagramm für Ansteuerung der Ringkolben,
- Figur 17:: Schnittansicht zu Drehantrieb mit kapazitivem Wegsensor,
- Figur 18:: Detail zu Sensoranordnung des kapazitiven Wegsensors,
- Figur 19:: Schnittansicht zu Drehantrieb mit Dehnungsmessstreifen,
- Figur 20:: Draufsicht auf Drehantrieb mit Dehnungsmessstreifen.

In den Figuren mit dem Bezugszeichen 1 bezeichnet ist ein erfindungsgemäßer

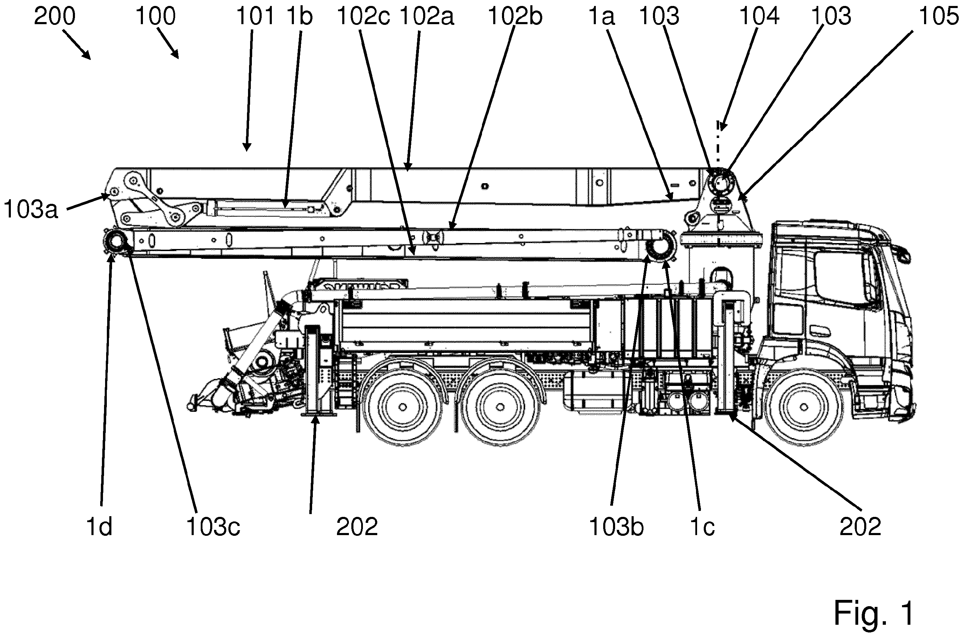

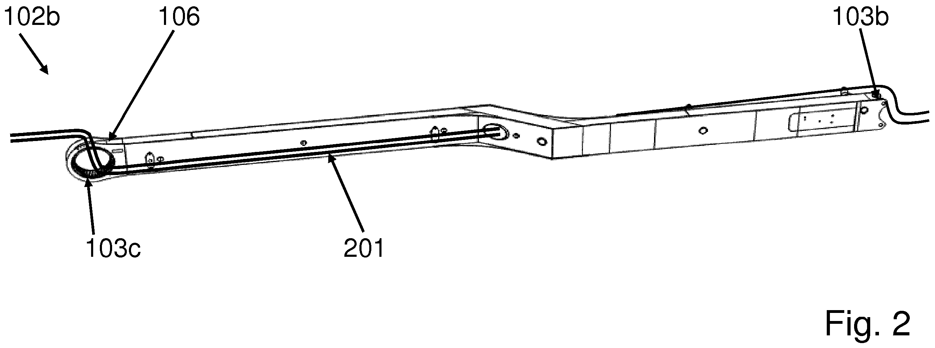

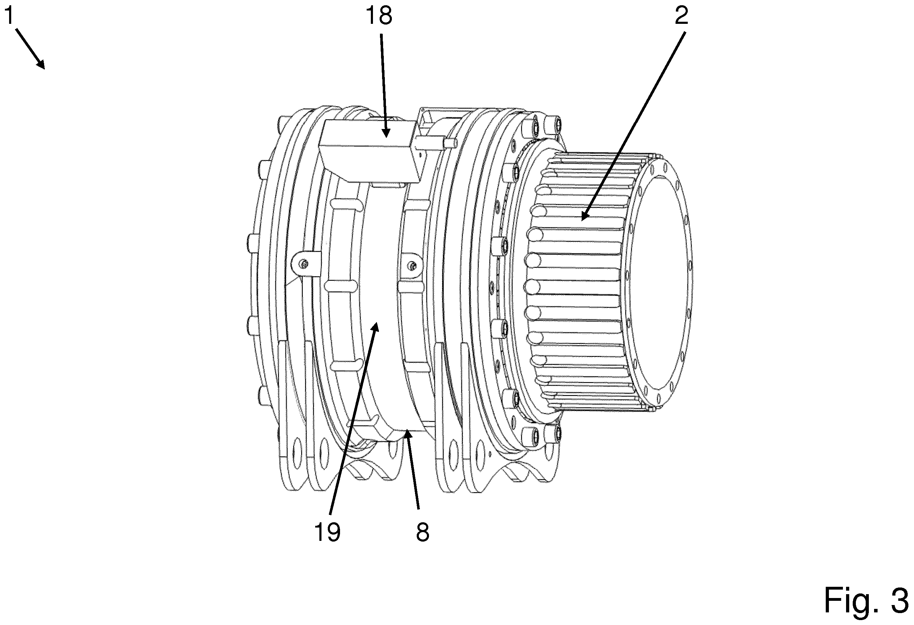

Großmanipulator mit einem Drehantrieb 1 dargestellt. Die Darstellung gemäß Figur 1 zeigt eine Autobetonpumpe 200 mit einem eine (hier nicht gezeigte) Betonförderleitung 201 (Fig. 2) tragenden Großmanipulator 100. Der Großmanipulator 100 weist einen Knickmast 101 auf, der mehrere Mastarme 102, 102a, 102b umfasst. Die Mastarme 102, 102a, 102b des Knickmastes 101 sind über Knickgelenke 103, 103a, 103b, 103c (Fig.2) mit dem jeweils benachbarten Mastarm 102, 102a, 102b oder dem Drehschemel 105 mittels je eines Antriebs 1 (Fig. 3), 1a, 1b, 1c, 1dschwenkbeweglich zueinander verbunden. Hierdurch kann der Knickmast 101 des Großmanipulators 100 auf der Autobetonpumpe 200 ausgefaltet und eingefaltet werden. Bevor der Knickmast 100 ausgefaltet wird, werden aus dem Fahrzeugprofil der Autobetonpumpe 200 ausklappbare oder ausfahrbare Stützen 202 ausgefahren bzw. ausgeklappt. Im hier gezeigten Ausführungsbeispiel sind die Antriebe 1a, 1b als auf Hebelgetriebe wirkende Hydraulikzylinder ausgebildet. Am dritten Mastarm 102b und dem vierten Mastarm 102C des hier gezeigten Knickmastes 101 ist ein Drehantrieb 1 (Fig. 3) angeordnet, der eine Schwenkbewegung zwischen dem dritten Mastarm 102b und dem vierten Mastarm 102c ermöglicht.

Die Figur 2 zeigt den dritten Mastarm 102b mit einer Aufnahme 106 für die Welle 2 (Fig. 3) des im Knickgelenk 103c angeordneten Drehantriebs 1 (Fig. 3). In Figur 2 zu erkennen ist, dass die entlang des Mastarmes 102b geführte Betonförderleitung 201 im Bereich des Knickgelenks 103c durch den Drehantrieb 1 (Fig. 3) geführt ist. Der an dem Knickgelenk 103c zwischen drittem Mastarm 102b und vierten Mastarm 102c angeordnete Drehantrieb 1 ist in Figur 3 zu sehen. Dieser Drehantrieb 1 (Fig. 3) kann auch an den anderen Knickgelenken 103, 103a, 103b (Fig. 1) des Knickmastes 101 angeordnet werden und dort eine Verschwenkung der Mastarme 102, 102a, 102b (Fig. 1) gegeneinander bzw. des ersten Mastarmes 102 (Fig. 1) gegenüber dem Drehschemel 105 (Fig. 1) ermöglichen. Auch können an den Knickgelenken 103, 103a, 103b, 103c (Fig. 1) des Knickmastes 101 (Fig. 1) jeweils Drehantriebe 1 (Fig. 3) vorgesehen werden.

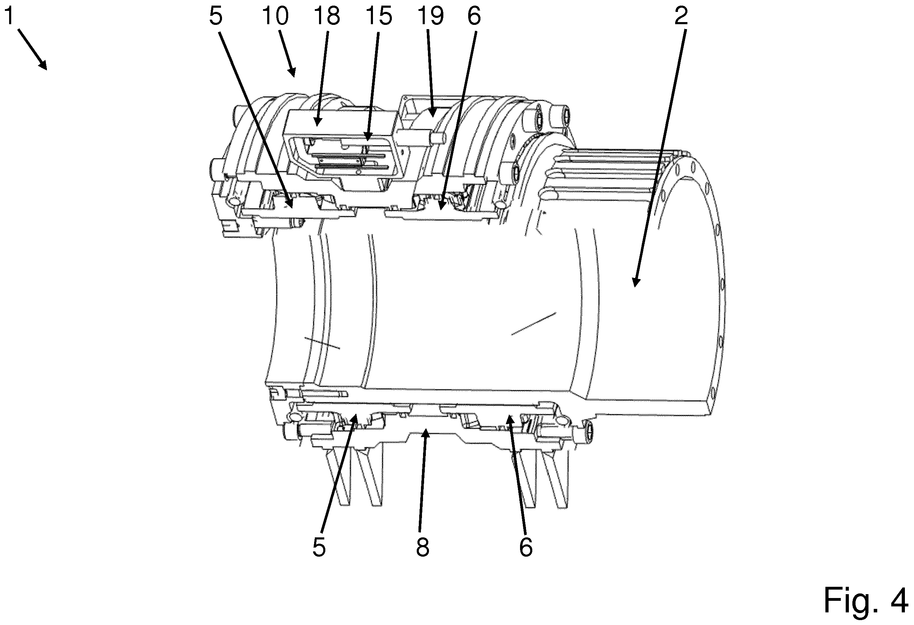

Der in Figur 3 gezeigte Drehantrieb 1 weist eine Welle 2 auf, die in einem Zylindergehäuse 8 gelagert ist. An der Außenseite 19 des Zylindergehäuses 8 ist ein Zusatzgehäuse 18 zu erkennen, zur Anordnung eines Sensors 15 (Fig. 4) zur Erfassung der Position der Ringkolben 5, 6 (Fig. 4).

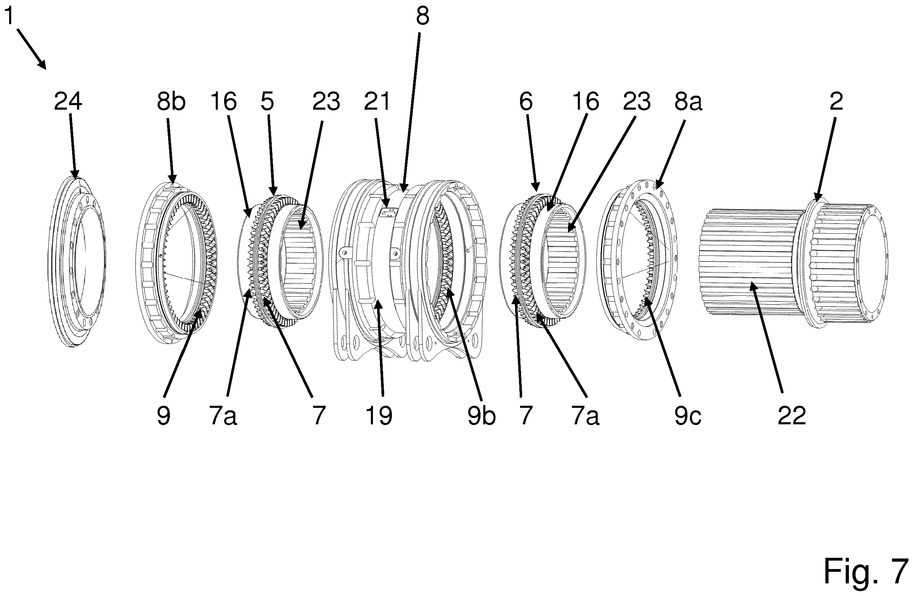

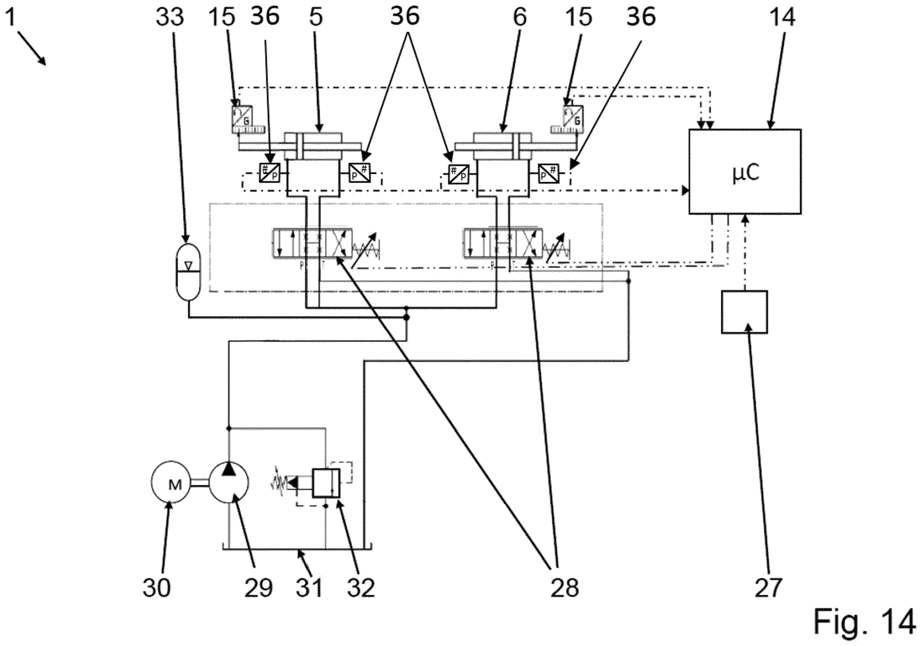

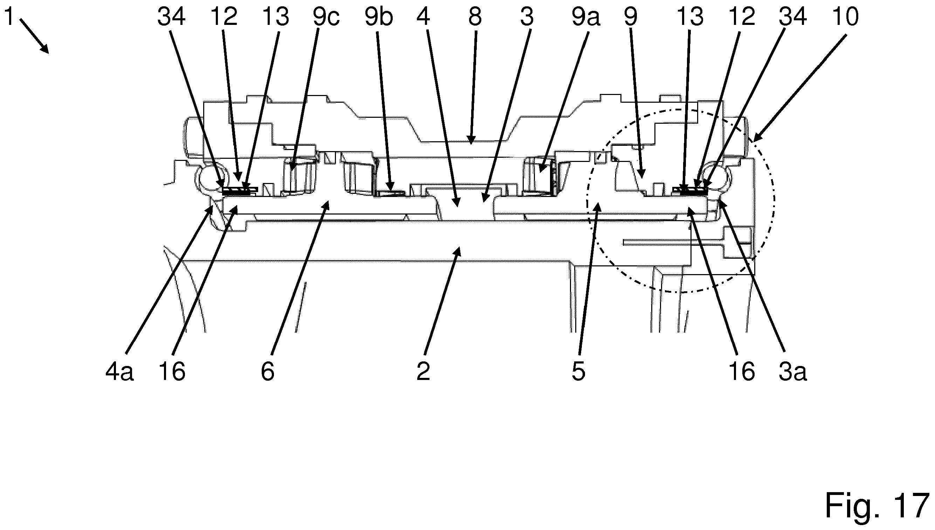

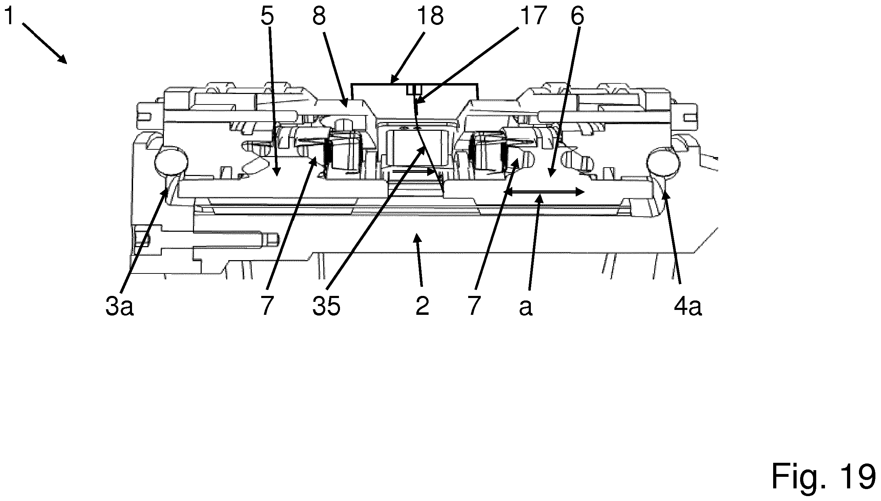

Die Ringkolben 5, 6 sind in Figur 4 zu erkennen, die eine Schnittdarstellung des in Figur 3 gezeigten Drehantriebes 1 ist. Die Ringkolben 5, 6 sind drehfest mit der Welle 2 verbunden und auf der Welle 2 in Wellenachsenrichtung zwischen jeweils zwei Endlagen 3, 3a, 4, 4a entlang eines Schiebeweges a (Fig. 19) durch Beaufschlagung mit Hydraulikfluid beweglich. Jeder der Ringkolben 5, 6 weist zwei voneinander weg gerichtete ringförmige Stirnverzahnungen 7, 7a (Fig. 7) auf, die besonders gut in Figur 7 zu erkennen sind. In dem Zylindergehäuse 8 des Drehantriebes 1 sind zu den Stirnverzahnungen 7, 7a (Fig. 7) der Ringkolben 5, 6 komplementäre Ringverzahnungen 9 (Fig. 7), 9a (Fig. 17), 9b, 9c (Fig. 7) angeordnet. Die Stirnverzahnungen 7, 7a (Fig. 7) der Ringkolben 5, 6 sind durch Bewegung der Ringkolben 5, 6 entlang des Schiebeweges a (Fig. 19) in Eingriff und außer Eingriff mit den Ringverzahnungen 9 (Fig. 7), 9a (Fig. 17), 9b, 9c (Fig. 7) des Zylindergehäuses 8 bringbar. Hierdurch entsteht eine Drehbewegung des Zylindergehäuses 8 relativ zur Welle 2. Eine Steuereinheit 14 (Fig. 14) steuert die Beaufschlagung der Ringkolben 5, 6 mit Hydraulikfluid, wobei die Steuereinheit 14 (Fig. 14) dazu ausgebildet ist eine hin und her gehende Bewegung der Ringkolben 5, 6 auf der Welle 2 nach Maßgabe eines Bedienungssignals zu bewirken. In Figur 4 ist zudem eine Sensoranordnung 10 zur Erfassung der Position der Ringkolben 5, 6 entlang des Schiebeweges a (Fig. 19) zu erkennen. Ein Wegsensor 15 dieser Sensoranordnung 10 ist in einem an der Außenseite 19 des Zylindergehäuses 8 angeordneten Zusatzgehäuse 18 angeordnet.

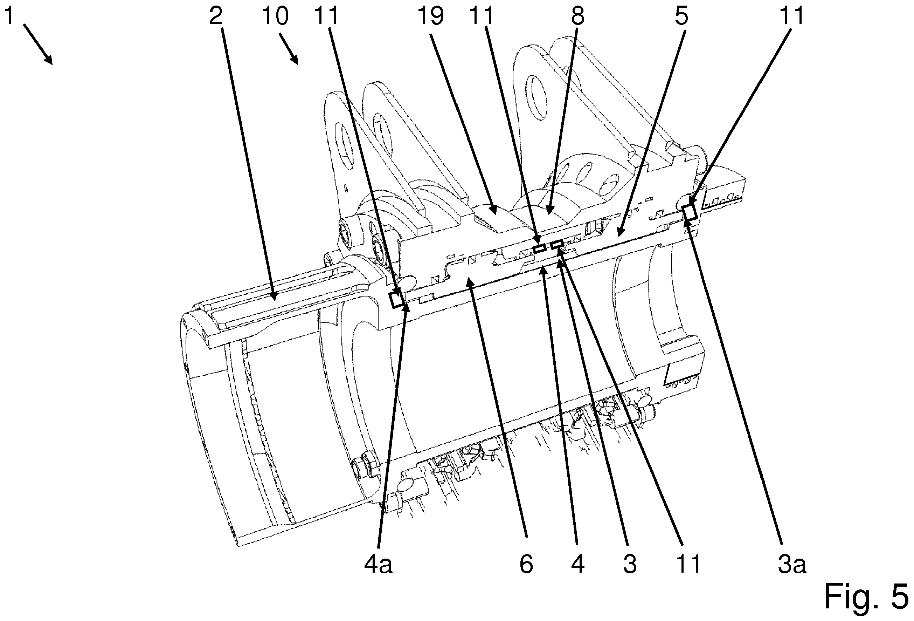

Die Figur 5 zeigt eine spezielle Ausführungsform des Drehantriebs 1. Der hier gezeigte Drehantrieb 1 weicht von dem Drehantrieb 1 gemäß Figur 4 dahingehend ab, dass die Sensoranordnung 10 zur Erfassung der Position der Ringkolben 5, 6 entlang des Schiebeweges a (Fig. 19) innerhalb des Zylindergehäuses 8 angeordnet ist und nicht außerhalb. Die innerhalb des Zylindergehäuses 8 angeordnete Sensoranordnung 10 umfasst mehrere Schalter 11, die bei Erreichen einer vorbestimmten Position des jeweiligen Ringkolbens 5, 6 schalten. Hierüber lässt sich die Position der Ringkolben 5, 6 entlang des jeweiligen Schiebeweges a (Fig. 19) an einer vorbestimmten Positionen erfassen. Bei Erreichen einer vorbestimmten Positionen der Ringkolben 5, 6 kann die Steuereinheit 14 (Fig. 14) die Beaufschlagung der Ringkolben 5, 6 mit Hydraulikfluid derart steuern, dass die Umschaltphase bei der hin und her gehenden Bewegung der Ringkolben 5, 6 auf der Welle 2 eingeleitet wird. Die Schalter 11 sind im Bereich der jeweiligen Endlage 3, 3a, 4, 4a für die hin und her gehende Bewegung der Ringkolben 5, 6 auf der Welle 2 angeordnet. Hiermit lassen sich auf einfache Weise Belastungsspitzen an den Zahnspitzen der Ringverzahnungen 9 (Fig. 7), 9a (Fig. 17), 9b, 9c (Fig. 7) und Stirnverzahnungen 7, 7a (Fig. 7) vermeiden.

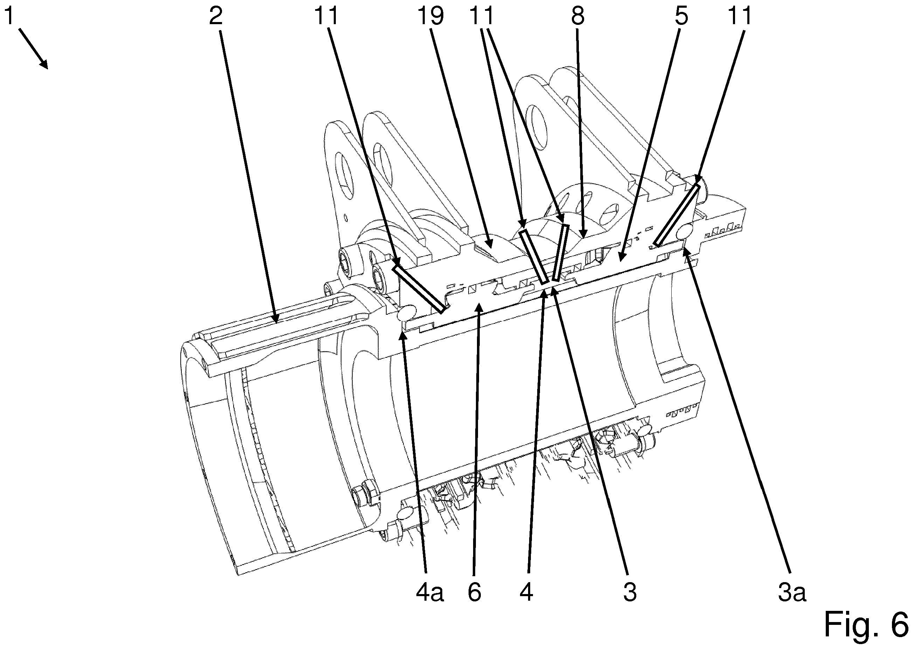

Die Figur 6 zeigt eine weitere spezielle Ausführungsform des Drehantrieb 1. Von dem Drehantrieb 1 gemäß Figur 4 und Figur 5 weicht der hier gezeigte Drehantrieb 1 dadurch ab, dass die Schalter 11, welche bei Erreichen einer vorbestimmten Positionen des jeweiligen Ringkolbens 5, 6 schalten, als induktiv schaltende Endlagenschalter 11 ausgebildet sind. Mit solchen induktiv schaltenden Endlagenschaltern 11 ist eine zuverlässige und verschleißarme Möglichkeit gegeben, die Lage der Ringkolben 5, 6 entlang des Schiebeweges a (Fig. 19) bei Erreichen einer vorbestimmten Position zuverlässig zu erfassen.

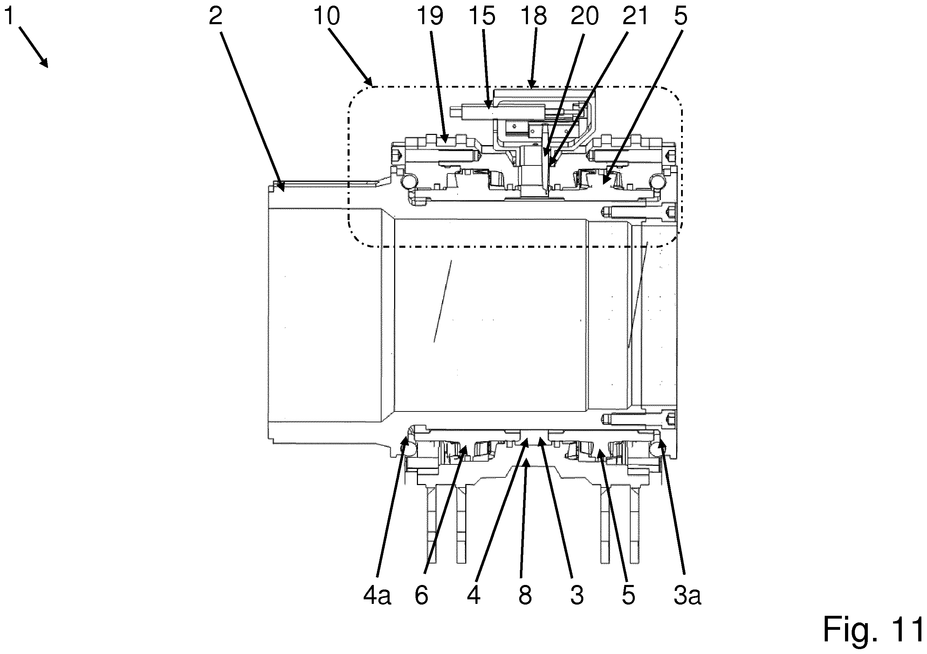

Die Figur 7 zeigt einen Drehantrieb 1 zerlegt in einer Explosionsdarstellung. Mittig in dieser Darstellung angeordnet ist das Zylindergehäuse 8 des Drehantriebs 1 gezeigt. Dieses Zylindergehäuse 8 weist innenseitig zu den Stirnverzahnungen 7, 7a der Ringkolben 5, 6 komplementäre Ringverzahnungen 9, 9a (Fig. 17) 9b, 9c auf. Die Stirnverzahnungen 7, 7a der Ringkolben 5, 6 sind durch Bewegen der Ringkolben 5, 6 auf der rechts abgebildeten Welle 2 in Eingriff und außer Eingriff bringbar. Das hier gezeigte Zylindergehäuses 8 umfasst zudem zwei zusätzliche Zylindergehäusesteile 8a, 8b, die mit zu den Stirnverzahnungen 7a der Ringkolben 5, 6 komplementären Ringverzahnungen 9, 9c ausgestattet sind. Die Stirnverzahnungen 7, 7a der Ringkolben 5, 6 sind auch mit den komplementären Ringverzahnungen 9, 9c in den zwei zusätzlichen Zylindergehäusesteilen 8a, 8b durch Bewegen der Ringkolben 5, 6 auf der Welle 2 in Eingriff und außer Eingriff bringbar. Um eine Bewegung der Ringkolben 5, 6 entlang eines Schiebeweges a (Fig. 19) auf der Welle 2 zwischen jeweils zwei Endlagen 3, 3a, 4, 4a (Fig. 11) zu ermöglichen weist die Welle 2 eine in Achsenrichtung verlaufende Schiebeverzahnung 22 auf. Die Ringkolben 5, 6 weisen innenseitig zu der Schiebeverzahnung 22 der Welle 2 komplementäre Innenschiebeverzahnungen 23 auf. Mit der Bewegung der Ringkolben 5, 6 auf der Welle 2 und das in Eingriff- und außer Eingriffbringen der Ringverzahnungen 9, 9a (Fig. 17) 9b, 9c und der Stirnverzahnungen 7, 7a kann eine Drehbewegung des Zylindergehäuses 8 relativ zur Welle 2 erzeugt werden. Um die Welle 2 des Drehantriebs 1 im Zylindergehäuse 8 zu sichern, ist zudem ein Stirnflansch 24 vorgesehen, der durch Verschraubung mit der Welle 2 diese im Zylindergehäuses 8 sichert. In Figur 7 außerdem zu erkennen ist, dass das Zylindergehäuses 8 eine Durchführung 21 aufweist, die zur Erfassung der Position der Ringkolben 5, 6 außerhalb des Zylindergehäuses 8 dient.

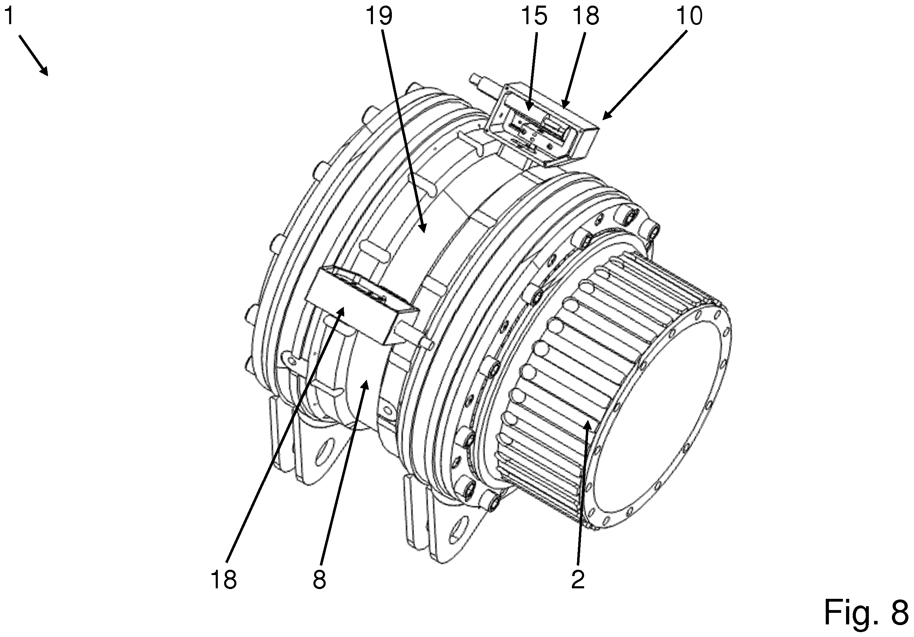

Die Figur 8 zeigt einen zusammengebauten Drehantrieb 1, wobei im Bereich der Durchführungen 21 (Fig. 7) am Zylindergehäuse 8 zwei Zusatzgehäuse 18 an der Außenseite 19 angeordnet sind. In den offen dargestellten Zusatzgehäusen 18 sind die Wegsensoren 15 erkennbar, mit denen außerhalb des Zylindergehäuses 8 die momentane Position der Ringkolben 5, 6 (Fig. 7) entlang des Schiebewegs a (Fig. 19) erfasst werden kann. Diese Wegsensoren 15 können induktiv erfassend oder kapazitiv erfassend oder nach jedem anderen, dem Fachmann bekannten Wegmessprinzip, ausgebildet sein.

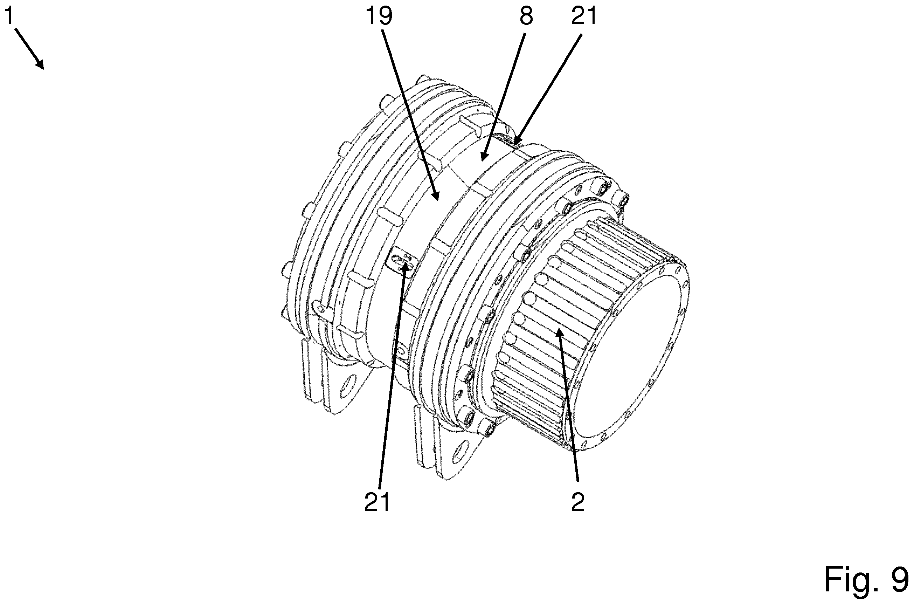

In Figur 9 ist der Drehantrieb 1 gemäß Figur 8 ohne die Zusatzgehäuse 18 (Fig. 8) an der Außenseite 19 des Zylindergehäuses 8 gezeigt. Hierdurch ist erkennbar, dass die Durchführungen 21 in das Zylindergehäuse 8 als in Richtung des Schiebeweges a (Fig. 19) verlaufende Langlöcher ausgebildet sind.

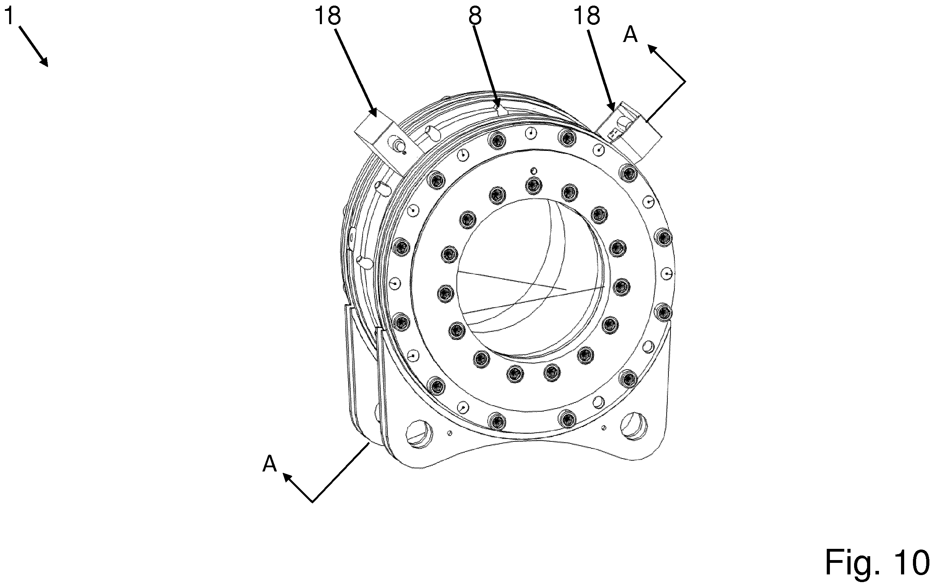

Die Figur 10 zeigt eine Seitenansicht in den Drehantrieb 1 gemäß Figur 8. Zu erkennen ist, dass die Welle 2 des Drehantriebs 1 hohl ausgebildet ist und somit die Möglichkeit gegeben ist, beispielsweise eine Betonförderleitung 201 (Fig. 2) durch die Welle 2 zu führen. In Figur 10 ist eine Schnittebene A-A durch das Zylindergehäuse 8 und ein an der Außenseite 19 angeordnetes Zusatzgehäuse 18 eingezeichnet.

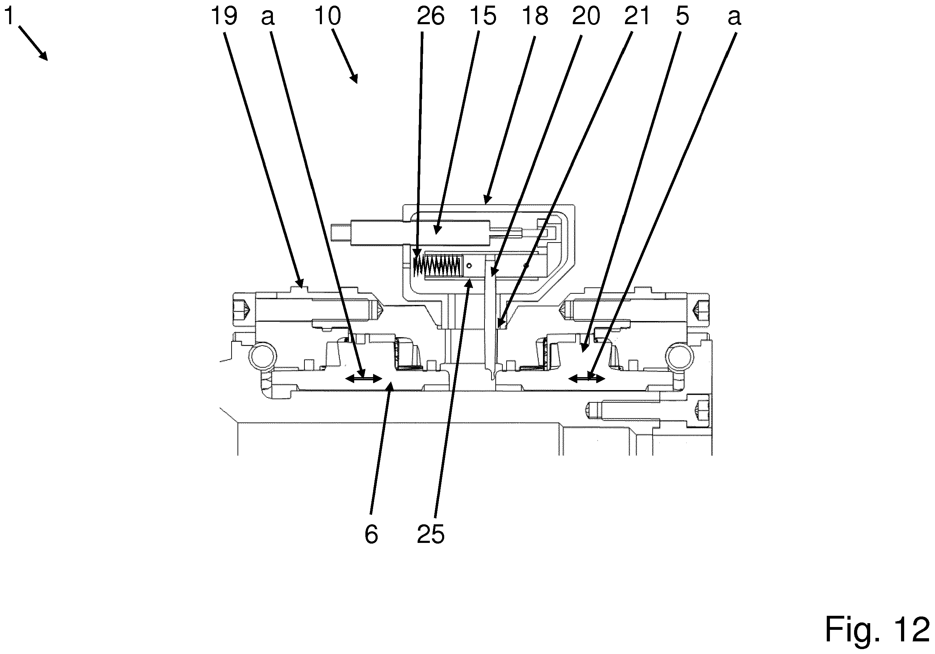

In Figur 11 ist eine Schnittdarstellung des Drehantriebs 1 gemäß der in Figur 10 gezeigten Schnittebene A-A gezeigt. Die Figur 11 zeigt, dass der im Zusatzgehäuse 18 angeordnete Wegsensor 15 die momentane Position des rechten Ringkolbens 5 entlang des Schiebeweges a (Fig. 12) auf der Welle 2 außerhalb des Zylindergehäuses 8 erfasst. Hierzu ist der Wegsensor 15 mit einer Taststange 20 verbunden, welche durch die Durchführung 21 in das Zylindergehäuses 8 geführt ist. Zu erkennen ist, dass die Taststange 20 mit dem rechten Ringkolben 5 in Eingriff steht. Hierdurch kann über die Taststange 20 die momentane Position des Ringkolbens 5 an den Wegsensor 15 im Zusatzgehäuse 18 übertragen werden. Zu der hier gezeigten Sensoranordnung 10 ist eine Detailansicht in Figur 12 zu sehen.

Aus Figur 12 ersichtlich ist, dass die Taststange 20 im Zusatzgehäuse 18 in einer Führung 25 geführt ist. Die hin und her gehende Bewegung des Ringkolbens 5 auf dem Schiebeweg a bewirkt eine Verlagerung der mit dem Ringkolben 5 in Eingriff stehenden Taststange 20. Durch diese Verlagerung wandert die Taststange 20 in der als Langloch ausgebildeten Durchführung 21 hin und her und überträgt so die Bewegung des rechten Ringkolbens 5 entlang des Schiebeweges a in das Zusatzgehäuse 18. In dem Zusatzgehäuse 18 ist eine Druckfeder 26 vorgesehen, die dafür sorgt, dass die Taststange 20 mit dem Ringkolben 5 in Eingriff bleibt. Die Bewegung der Taststange 20 auf der Führung 25 wird auf den Wegsensor 15 übertragen, damit dieser die momentane Position des Ringkolbens 5 entlang des Schiebeweges a aufzeichnen kann. Für den linken Ringkolben 6 ist eine entsprechende Sensoranordnung in einem in Figur 8 ersichtlichen Zusatzgehäuse 18 (Fig. 8) angeordnet.

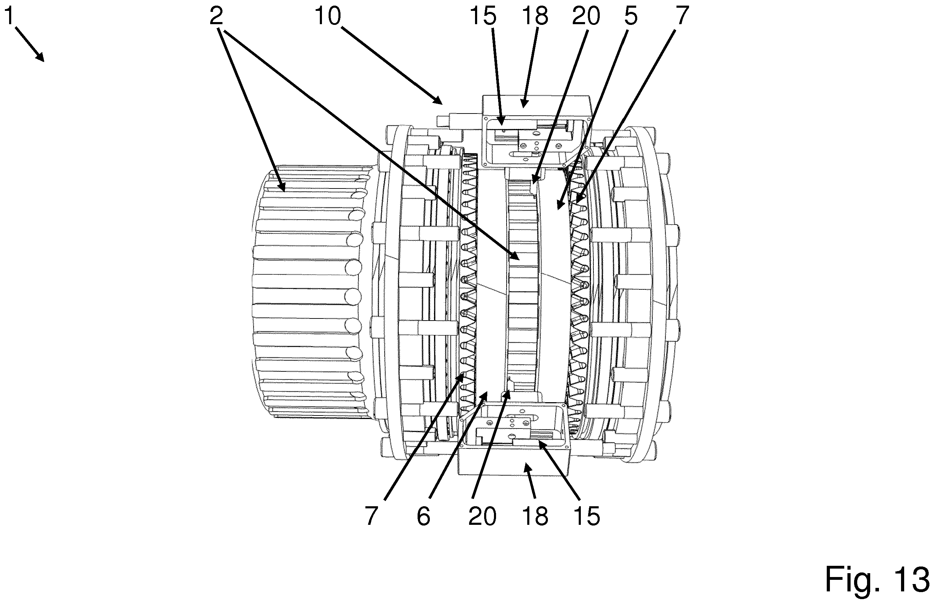

Die Figur 13 zeigt die beiden Wegsensoren 15 in den Zusatzgehäusen 18. Zu erkennen ist, dass die Taststange 20 zur Erfassung der momentanen Position der jeweiligen Ringkolben 5, 6 mit dem jeweiligen Ringkolben 5, 6 in Eingriff stehen. Hierzu wurde das Zylindergehäuse 8 (Fig. 8) in der Darstellung gemäß Figur 13 nicht dargestellt. Die Taststangen 20 können, wie hier gezeigt, mit einem Ende an der Kolbenschulter des jeweiligen Ringkolbens 5, 6 angreifen oder beispielsweise auch in einer Nut an der Kolbenschulter geführt werden.

In Figur 14 ist ein vereinfachter Hydraulikplan für die Ansteuerung der zwei Ringkolben 5, 6 (Fig.13) des Drehantriebs 1 (Fig.3) gezeigt. Die Wegsensoren 15, 17 (Fig. 13 u. 19), welche die momentane Position der Ringkolben 5, 6 entlang des Schiebeweges a (Fig. 12) erfassen, sind mit der Steuereinheit 14 verbunden, die die Beaufschlagung der Ringkolben 5, 6 (Fig.13) mit Hydraulikfluid steuert. Die Steuereinheit 14 ist dazu eingerichtet, die hin und her gehende Bewegung der Ringkolben 5, 6 (Fig.13) auf der Welle 2 (Fig. 7) nach Maßgabe eines Bedienungssignals zu bewirken. Dieses Bedienungssignal kann über eine Eingabeeinheit 27 erfolgen, über welche beispielsweise die Geschwindigkeit der Drehbewegung des Zylindergehäuses 8 (Fig. 7) relativ zur Welle 2 (Fig. 7) aber auch die Drehrichtung vorgegeben werden kann. Die Beaufschlagung der Ringkolben 5, 6 (Fig. 11) mit Hydraulikfluid wird über elektrisch angesteuerte Proportionalventile 28 erreicht, mit denen die Steuereinheit 14 in Verbindung steht. Die Proportionalventile 28 werden über eine Hydraulikpumpe 29 mit Hydraulikfluid versorgt. Die Hydraulikpumpe 29 wird vorzugsweise über den Antriebsmotor 30 der Autobetonpumpe 200 (Fig. 1) angetrieben. Das über die Hydraulikpumpe 29 geförderte Hydraulikfluid wird aus einem Hydrauliktank 31 gespeist. Das gezeigte System verfügt auch über eine Konstantdruckregelung 32, mit welcher ein konstanter Druck an den Proportionalventilen 28 eingestellt wird. Zur Verbesserung des Konstantdrucks an den Proportionalventilen 28 kann zudem ein Hydraulikspeicher 33 nah an den Proportionalventilen 28 angeordnet sein. Mittels der Proportionalventile 28 können die Geschwindigkeiten der Ringkolben 5, 6, abhängig von deren jeweiliger Position, in einem geschlossenen Kreislauf geregelt werden. Dadurch wird die Gleichförmigkeit der Drehbewegung des Drehantriebes gegenüber einer Steuerscheibensteuerung, bei der lediglich die Richtung des Hydraulikflusses zu den Umschaltzeitpunkten geändert wird, erheblich verbessert.

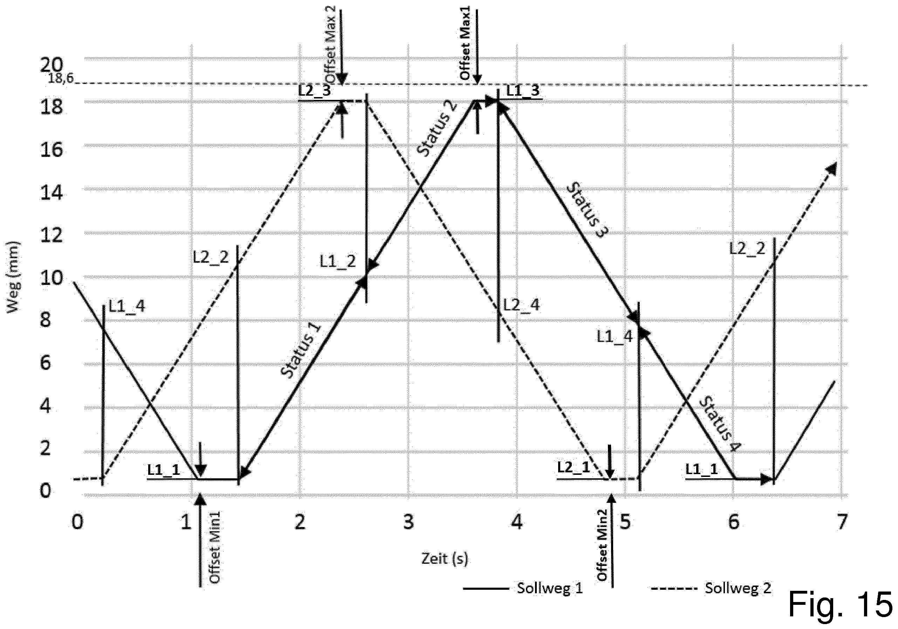

Wird der Drehantrieb 1 (Fig. 3) geregelt betrieben, so muss die Bewegung der Ringkolben 5, 6 (Fig. 7) ständig erfasst und aktualisiert werden. In Figur 15 sind vier Bewegungsabschnitte (Status 1 bis Status 4) graphisch dargestellt. Die gleiche Aufteilung gilt für beide Ringkolben 5, 6 (Fig. 7). Die Bewegungsabschnitte werden durch Werte definiert, welche durch ein Teaching-Programm verändert werden können. Für die Rechtsdrehung und die Linksdrehung der Welle 2 (Fig. 7) relativ zum Zylindergehäuse 8 (Fig. 7) werden ebenfalls diese Bewegungsabschnitte ähnlich vergeben, jedoch in umgekehrter Reihenfolge. Mit den Werten "L1_1 + OffsetMin1", "L1_3 - OffsetMax1" bzw. den Werten "L2_1 +OffsetMin2", "L2_3 - OffsetMax2" wird der Hub des Ringkolbens 5, 6 (Fig. 7) begrenzt bzw. wird die Bewegung gestoppt. Mit den Werten "L1_2", "L1_4", bzw. den Werten "L2_2", "L2_4" setzt sich der jeweils andere Ringkolben 5, 6 (Fig. 7) wieder in Bewegung. In diesem Diagramm sind insbesondere auch Stillstandszeiten bzw. Phasen geringerer Geschwindigkeiten der Ringkolben 5, 6 im Bereich der Endanschläge erkennbar. Diese dienen dazu, dass die Ringkolben 5,6 zum Zeitpunkt der Wegumschaltung nicht wieder sofort anfahren, sondern zunächst abwarten, bis die Spitzen der Stirnverzahnungen 9, 9a durch die von dem in Bewegung befindlichen Ringkolben weiter geschoben werden, so dass die Verzahnungen 7, 7a des Ringkolbens 5 bzw. 6 und der Stirnverzahnungen 9, 9a in der nächsten Zahnlücke ineinandergreifen. Insbesondere schon mit den im Zusammenhang mit den Figuren 5 und 6 erläuterten Sensoriken lässt sich eine derartige Regelung einfach realisieren.

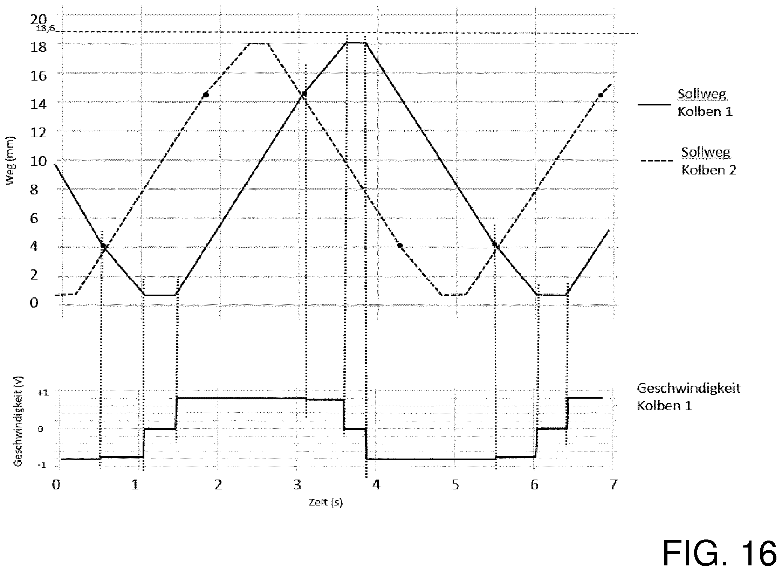

Die Figur 16 zeigt ebenfalls ein Weg-Zeit Diagramm für die Ansteuerung der Ringkolben 5, 6 (Fig. 7), sowie ein entsprechendes Geschwindigkeitsdiagramm für einen der Ringkolben, bei der die ständige Erfassung der Position der Ringkolben 5, 6, wie oben erläutert, vorteilhaft ist. Beide Ringkolben 5, 6 (Fig. 7) haben einen maximalen Schiebeweg von Endanschlag zu Endanschlag von 18,6 mm. Dieser maximale Schiebeweg wird aber nicht vollständig ausgenutzt, sondern die Ringkolben 5, 6 (Fig. 7) halten ca. 0,3 mm vor den Endanschlägen an. Solange die Gefahr besteht, dass die Stirnverzahnung 7, 7a (Fig. 7) der Ringkolben 5, 6 (Fig. 7) mit der Zahnspitze auf die Zahnspitze der Ringverzahnungen 9 (Fig. 7), 9a (Fig. 17), 9b, 9c (Fig. 7) im Zylindergehäuse 8 (Fig. 7) eingreift, bleibt der jeweilige Ringkolben 5, 6 (Fig. 7) kurz auf dem Schiebeweg a stehen bzw. die Geschwindigkeit des jeweiligen Ringkolben wird verringert bis der andere Ringkolben 5, 6 (Fig. 7) die Ringverzahnung 9 (Fig. 7), 9a (Fig. 17), 9b, 9c (Fig. 7) im Zylindergehäuse 8, 8a, 8b (Fig. 7) soweit geschoben hat, dass die Ringverzahnungen 9 (Fig. 7), 9a (Fig. 17), 9b, 9c (Fig. 7) und Stirnverzahnungen nicht Spitze auf Spitze und mit ausreichender Materialstärke ineinander greifen. Nach dem Stillstand auf dem Schiebeweg a (Fig. 19) und vor dem Eingriff fahren die Ringkolben 5, 6 (Fig. 7) zunächst mit einer etwas höheren Geschwindigkeit entlang des Schiebeweges a (Fig. 19), während die Geschwindigkeit des jeweils anderen Ringkolbens leicht reduziert ist, um die Antriebslast definiert zu übernehmen. Durch geschickte Regelung der Geschwindigkeiten der Ringkolben 5, 6 lässt sich somit die Gleichförmigkeit der Drehbewegung des Drehantriebs optimieren. Das in Figur 16 gezeigte und oben beschriebene Diagramm ist insbesondere beim Heben des jeweils nächsten Mastsegmentes relevant. Beim Senken des Mastsegmentes ist die Regelung entsprechend umgekehrt anwendbar.

Die Lastübergabepunkte und die damit einhergehende Änderung der Kolbengeschwindigkeit lassen sich noch besser definieren, wenn die Hydrauliköldrücke in den Zylinderkammern zu Hilfe genommen werden. Hierfür sind, wie in Figur 14 dargestellt, an dem Ringkolben A 5 und dem Ringkolben B 6 jeweils zwei Drucksensoren 36 zur Messung des die Ringkolben jeweils beaufschlagenden Hydraulikdruckes angeordnet. Die auf den Drehantrieb wirkende Last, die beispielsweise von der Stellung des Mastarmes 102a, 102b abhängig ist, kann mittels der Drucksensoren 36 über die Druckdifferenz der zwei einem Ringkolben 5, 6 zugeordneten Drucksensoren 36 ermittelt und für die Optimierung der Lastübergabepunkte verwendet werden.

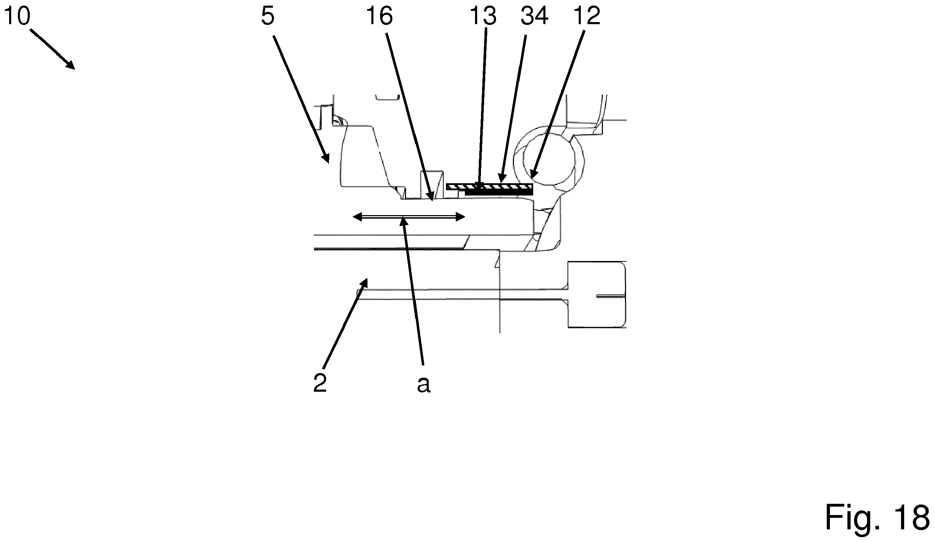

Die Figur 17 zeigt eine weitere spezielle Ausführung des Drehantriebs 1 mit einer kapazitiv erfassenden Sensoranordnung 10. In der hier gezeigten Ausführung weist der Wegsensor 12, der die momentane Position des jeweiligen Ringkolbens 5, 6 erfasst, eine gegenüber dem Zylindergehäuses 8 isolierte Ringelektrode in Form eines isolierten metallischen Rings 13, auf. In diese Ringelektrode 13 taucht ein Abschnitt 16 des vom Wegsensor 12 erfassten Ringkolbens 5, 6 bei Verschiebung entlang des Schiebeweges a (Fig. 18) unterschiedlich tief ein. Hierüber lässt sich die momentane Position des Ringkolbens 5, 6 entlang des Schiebewegs a (Fig. 18) einfach kapazitiv erfassen. Je nach Eintauchtiefe des Abschnittes 16 in den Bereich der Ringelektrode 13 kann eine geänderte Kapazität an der Ringelektrode 13 gemessen werden. Wie in Figur 17 zu erkennen ist, ist die Ringelektrode 13 gegenüber dem Zylindergehäuse 8 durch einen Kunststoffring 34 isoliert. Außerdem ist zwischen dem eintauchenden Abschnitt 16 des Ringkolbens 5, 6 und der Ringelektrode 13 ein Luftspalt gebildet, der eine Isolierung der Ringelektrode 13 vom eintauchenden Abschnitt 16 bietet. Sowohl der rechte Ringkolben 5 als auch der linke Ringkolben 6 werden durch einen solchen kapazitiven Wegsensor 12 erfasst.

Die Figur 18 zeigt eine Detailansicht aus Figur 17 wobei hier die Sensoranordnung 10 genauer zu erkennen ist. Zwischen dem Kunststoffring 34 und dem Ringkolben 5 ist die Ringelektrode 13 angeordnet. Bei Verschiebung des Ringkolbens 5 auf dem Schiebeweg a taucht der Abschnitt 16 unterschiedlich tief in die vom Zylindergehäuse 8 isolierte Ringelektrode 13 ein. Hierdurch ändert sich die Kapazität an der Ringelektrode 13 und die momentane Position des Ringkolbens 5 auf dem Schiebeweg a und kann über die Ringelektrode 13 berührungslos gemessen werden.

Die Figur 19 zeigt eine weitere spezielle Ausführungsform des Drehantriebs 1. Hier ist der Wegsensor 17, der die momentane Position eines Ringkolbens 6 entlang des Schiebeweges a erfassen kann, mit einem Dehnungsmessstreifen 17 versehen. Dieser Dehnungsmessstreifen 17 liefert ein von der momentanen Position des Ringkolbens 6 auf dem Schiebeweg a abhängiges Signal. Dies wird dadurch erreicht, dass der Dehnungsmessstreifen 17 auf einer vorgespannten Biegefeder 35 montiert ist, die mit dem Ringkolben 6 zur Erfassung seiner momentanen Position in Eingriff steht. Durch die Vorspannung der Biegefeder 35 bleibt diese mit dem Ringkolben in Eingriff und der Widerstand des Dehnungsmessstreifen 17 ändert sich bei einer Veränderung der Biegung der Biegefeder 35, sodass sich die momentane Position des Ringkolbens 6 entlang des Schiebeweges a erfassen lässt. Die vorgespannte Biegefeder 35 liegt, wie gezeigt, mit einem Ende an der Kolbenschulter des rechten Ringkolbens 6 an, kann aber auch in einer Nut am Kolben 6 geführt werden. Zur Erfassung der momentanen Position des linken Ringkolbens 5 auf dem Schiebeweg a (Fig. 12) kann hier ebenfalls ein entsprechender Wegsensor mit einem Dehnungsmessstreifen 17 und vorzugsweise einer Biegefeder 35 vorgesehen werden.

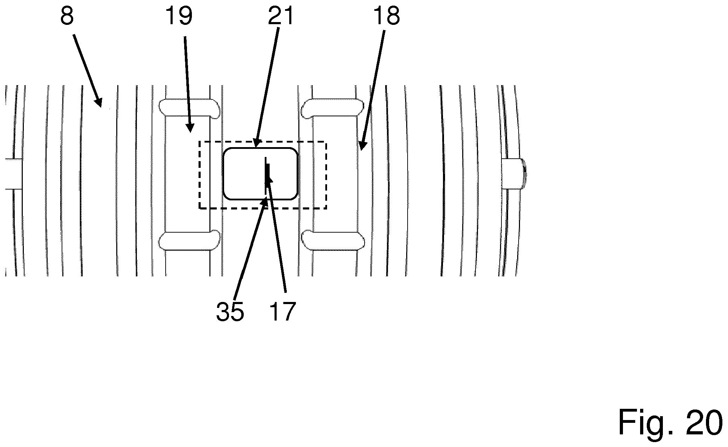

Die Figur 20 zeigt eine Draufsicht auf den Wegsensor gemäß Figur 19. Zu erkennen ist, wie der Dehnungsmessstreifen 17 und die Biegefeder 35 durch die langlochförmige Durchführung 21 in das Zylindergehäuses 8 geführt ist.

### Bezugszeichenliste

1 Drehantrieb
2 Erstes Drehantriebselement (Welle)
3 3a Endlage
4 4a Endlage
5 Ringkolben A
6 Ringkolben B
7 7a Stirnverzahnungen
8 8a, 8b Zweites Drehantriebselement (Zylindergehäuse)
9 9a 9b 9c Ringverzahnungen
10 Sensoranordnung
11 Schalter
12 Wegsensor
13 Ringelektrode
14 Steuereinheit
15 Wegsensor
16 Abschnitt
17 Dehnungsmessstreifen
18 Zusatzgehäuse
19 Außenseite
20 Taststange
21 Durchführung
22 Schiebeverzahnung
23 Innenschiebeverzahnung
24 Stirnflansch
25 Führung
26 Druckfeder
27 Eingabeeinheit
28 Proportionalventil
29 Hydraulikpumpe
30 Antriebsmotor
31 Hydrauliktank
32 Konstantdruckregelung
33 Hydraulikspeicher
34 Kunststoffring
35 Biegefeder
36 Drucksensor
100 Großmanipulator
101 Knickmast
102 102a 102b Mastarme
103 103a 103b 103c Knickgelenke
104 Hochachse
105 Drehschemel
106 Aufnahme
200 Autobetonpumpe
201 Betonföderleitung
202 Stützen

## Patentansprüche

1. Großmanipulator (100) mit einem Knickmast (101), der zwei oder mehr Mastarme (102, 102a, 102b) umfasst, wobei die Mastarme (102, 102a, 102b) über Knickgelenke (103, 103a, 103b, 103c) mit dem jeweils benachbarten Mastarm (102, 102a, 102b) mittels je eines Antriebs (1, 1a, 1b, 1c) schwenkbeweglich verbunden sind, wobei wenigstens einer der Antriebe (1, 1a, 1b, 1c) als hydraulischer Drehantrieb (1) ausgebildet ist, mit
- einem ersten, als Welle ausgebildeten Drehantriebselement (2),
- wenigstens zwei mit dem ersten Drehantriebselement (2) drehfest verbundenen und an dem ersten Drehantriebselement (2) zwischen jeweils zwei Endlagen (3, 3a, 4, 4a) entlang eines Schiebeweges (a) durch Beaufschlagung mit einem Hydraulikfluid axial beweglichen Ringkolben (5, 6), wobei jeder Ringkolben (5, 6) zwei voneinander weg gerichtete, ringförmige Stirnverzahnungen (7, 7a) aufweist,
- einem zweiten Drehantriebselement (8) mit zu den Stirnverzahnungen (7, 7a) der Ringkolben (5, 6) komplementären Ringverzahnungen (9, 9a, 9b, 9c), wobei die Stirnverzahnungen (7, 7a) der Ringkolben (5, 6) mit den zugehörigen Ringverzahnungen (9, 9a, 9b, 9c) des zweiten Drehantriebselements (8) durch Bewegen der Ringkolben (5, 6) an dem ersten Drehantriebselement (2) in Eingriff und außer Eingriff bringbar sind, wodurch eine Drehbewegung des zweiten Drehantriebselements (8) relativ zum ersten Drehantriebselement (2) entsteht, und
- einer Steuereinheit (14), die die Beaufschlagung der Ringkolben (5, 6) mit dem Hydraulikfluid steuert, wobei die Steuereinheit (14) eingerichtet ist, eine hin und her gehende Bewegung der Ringkolben (5, 6) auf der Welle (2) nach Maßgabe eines Bedienungssignals zu bewirken,
wobei das zweite Drehantriebselement (8) als Zylindergehäuse ausgebildet ist, wobei die Ringkolben (5,6) auf der Welle (2) zwischen den jeweils zwei Endlagen (3,3a,4,4a) entlang des Schiebeweges (a) durch Beaufschlagung mit dem Hydraulikfluid axial beweglich sind,
**gekennzeichnet durch**
eine mit der Steuereinheit (14) verbundene Sensoranordnung (10, 11, 12, 17) zur Erfassung der Positionen der Ringkolben (5, 6) entlang des jeweiligen Schiebeweges (a), wobei die Steuereinheit (14) die Geschwindigkeit der Ringkolben (5, 6) abhängig von den Signalen der Sensoranordnung (10, 11, 12, 15, 17) regelt.

2. Großmanipulator (100) nach Anspruch 1, **dadurch gekennzeichnet, dass** die Sensoranordnung (10) dazu ausgebildet ist, die Positionen der Ringkolben (5, 6) bei Erreichen der jeweiligen Endlage (3, 3a, 4, 4a) zu erfassen.

3. Großmanipulator (100) nach Anspruch 1 oder 2, **dadurch gekennzeichnet, dass** die Sensoranordnung (10) mindestens einen Schalter (11) umfasst, der bei Erreichen einer vorbestimmten Position des jeweiligen Ringkolbens (5, 6) schaltet.

4. Großmanipulator (100) nach Anspruch 3, **dadurch gekennzeichnet, dass** der Schalter (11) als induktiv schaltender Endlagenschalter ausgebildet ist.

5. Großmanipulator (100) nach einem der Ansprüche 1 bis 4, **dadurch gekennzeichnet, dass** die Sensoranordnung (10) mindestens einen Wegsensor (12, 15, 17) umfasst, der die momentane Position mindestens eines Ringkolbens (5, 6) entlang des Schiebeweges (a) erfasst.

6. Großmanipulator (100) nach Anspruch 5, **dadurch gekennzeichnet, dass** der Wegsensor (12, 15) induktiv erfassend ausgebildet ist.

7. Großmanipulator (100) nach Anspruch 5, **dadurch gekennzeichnet, dass** der Wegsensor (12, 15) kapazitiv erfassend ausgebildet ist.

8. Großmanipulator (100) nach Anspruch 7, **dadurch gekennzeichnet, dass** der Wegsensor (12) eine gegenüber dem Zylindergehäuse (8) isolierte Ringelektrode (13) aufweist, in die zumindest ein Abschnitt (16) des von dem Wegsensor (12) erfassten Ringkolbens (5, 6) bei Verschiebung entlang des Schiebeweges (a) unterschiedlich tief eintaucht.

9. Großmanipulator (100) nach Anspruch 5, **dadurch gekennzeichnet, dass** der Wegsensor (17) einen Dehnungsmessstreifen umfasst, der ein von der momentanen Position des mindestens einen Ringkolbens (5, 6) entlang des Schiebeweges (a) abhängiges Signal liefert.

10. Großmanipulator (100) nach einem der Ansprüche 5 bis 9, **dadurch gekennzeichnet, dass** der Wegsensor (15, 17) außerhalb eines äußeren Drehantriebselements (8) angeordnet ist.

11. Großmanipulator (100) nach Anspruch 10, **dadurch gekennzeichnet, dass** der Wegsensor (15, 17) der Sensoranordnung (10) in einem Zusatzgehäuse (18) angeordnet ist, welches an der Außenseite (19) desäußeren Drehantriebselements (8) angeordnet ist.

12. Großmanipulator (100) nach Anspruch 10 oder 11, **dadurch gekennzeichnet, dass** der Wegsensor (15, 17) über eine Taststange (20) die momentane Position des mindestens einen Ringkolbens (5, 6) entlang des Schiebeweges (a) im äußeren Drehantriebselement (8) erfasst, wobei die Taststange (20) durch eine Durchführung (21) in das äußere Drehantriebselement (8) geführt ist.

13. Großmanipulator (100) nach Anspruch 12, **dadurch gekennzeichnet, dass** die Taststange (20) mit dem mindestens einen Ringkolben (5, 6) in Eingriff steht.

14. Autobetonpumpe (200) mit einem eine Betonförderleitung (201) tragenden Großmanipulator (100) nach einem der vorhergehenden Ansprüche.

## Claims

1. Large manipulator (100) having an articulated boom (101), which comprises two or more boom arms (102, 102a, 102b), wherein the boom arms (102, 102a, 102b) are connected pivotably via articulated joints (103, 103a, 103b, 103c) to the respectively adjacent boom arm (102, 102a, 102b) by means of a drive (1, 1a, 1b, 1c) in each case, wherein at least one of the drives (1, 1a, 1b, 1c) is designed as a hydraulic rotary drive (1), with
- a first rotary drive element (2) formed as a shaft,
- at least two annular pistons (5, 6), which are connected in a torqueproof manner to the first rotary drive element (2) and are axially movable on the first rotary drive element (2) along a sliding path (a) between respectively two end positions (3, 3a, 4, 4a) by being acted upon by a hydraulic fluid, wherein each annular piston (5, 6) has two annular spur toothings (7, 7a) directed away from each other,
- a second rotary drive element (8) with annular toothings (9, 9a, 9b, 9c) complementary to the spur toothings (7, 7a) of the annular pistons (5, 6), wherein the spur toothings (7, 7a) of the annular pistons (5, 6) can be brought into engagement and out of engagement with the associated annular toothings (9, 9a, 9b, 9c) of the second rotary drive element (8) by moving the annular pistons (5, 6) on the first rotary drive element (2), whereby a rotational movement of the second rotary drive element (8) occurs relative to the first rotary drive element (2), and
- a control unit (14), which controls the action of the hydraulic fluid upon the annular pistons (5, 6), wherein the control unit (14) is configured to cause a reciprocating movement of the annular pistons (5, 6) on the shaft (2) according to an operating signal,
wherein the second rotary drive element (8) is formed as a cylinder housing, wherein the annular pistons (5, 6) are axially movable on the shaft (2) between the respectively two end positions (3, 3a, 4, 4a) along the sliding path (a) by being acted upon by the hydraulic fluid,
**characterised by** a sensor arrangement (10, 11, 12, 17) connected to the control unit (14) to detect the positions of the annular pistons (5, 6) along the respective sliding path (a), wherein the control unit (14) controls the velocity of the annular pistons (5, 6) as a function of the signals of the sensor arrangement (10, 11, 12, 15, 17).

2. Large manipulator (100) according to claim 1, **characterised in that** the sensor arrangement (10) is designed to detect the positions of the annular pistons (5, 6) upon reaching the respective end position (3, 3a, 4, 4a).

3. Large manipulator (100) according to claim 1 or 2, **characterised in that** the sensor arrangement (10) comprises at least one switch (11), which switches when a predetermined position of the respective annular piston (5, 6) is reached.

4. Large manipulator (100) according to claim 3, **characterised in that** the switch (11) is designed as an inductively switching limit position switch.

5. Large manipulator (100) according to any one of claims 1 to 4, **characterised in that** the sensor arrangement (10) comprises at least one path sensor (12, 15, 17), which detects the momentary position of at least one annular piston (5, 6) along the sliding path (a).

6. Large manipulator (100) according to claim 5, **characterised in that** the path sensor (12, 15) is designed to detect inductively.

7. Large manipulator (100) according to claim 5, **characterised in that** the path sensor (12, 15) is designed to detect capacitively.

8. Large manipulator (100) according to claim 7, **characterised in that** the path sensor (12) has an annular electrode (13), which is isolated with respect to the cylinder housing (8) and into which at least a section (16) of the annular piston (5, 6) detected by the path sensor (12) dips to a varying depth upon movement along the sliding path (a).

9. Large manipulator (100) according to claim 5, **characterised in that** the path sensor (17) comprises a strain gauge, which supplies a signal dependent on the momentary position of the at least one annular piston (5, 6) along the sliding path (a).

10. Large manipulator (100) according to any one of claims 5 to 9, **characterised in that** the path sensor (15, 17) is arranged outside an external rotary drive element (8).

11. Large manipulator (100) according to claim 10, **characterised in that** the path sensor (15, 17) of the sensor arrangement (10) is arranged in an additional housing (18), which is arranged on the outside (19) of the external rotary drive element (8).

12. Large manipulator (100) according to claim 10 or 11, **characterised in that** the path sensor (15, 17) detects the momentary position of the at least one annular piston (5, 6) along the sliding path (a) in the external rotary drive element (8) by way of a feeler rod (20), wherein the feeler rod (20) is guided through a bushing (21) into the external rotary drive element (8).

13. Large manipulator (100) according to claim 12, **characterised in that** the feeler rod (12) is in engagement with the at least one annular piston (5, 6).

14. Truck-mounted concrete pump (200) with a large manipulator (100) according to any one of the preceding claims carrying a concrete delivery line (201).

## Revendications

1. Manipulateur de grande taille (100) avec un mât articulé (101), qui comprend deux bras de mât (102, 102a, 102b) ou plus, dans lequel les bras de mât (102, 102a, 102b) sont reliés de manière mobile par pivotement au moyen respectivement d'un entraînement (1, 1a, 1b, 1c) au bras de mât (102, 102a, 102b) respectivement adjacent par l'intermédiaire d'articulations (103, 103a, 103b, 103c), dans lequel au moins un des entraînements (1, 1a, 1b, 1c) est réalisé en tant qu'entraînement en rotation (1) hydraulique, avec
- un premier élément d'entraînement en rotation (2) réalisé en tant qu'un arbre,
- au moins deux pistons annulaires (5, 6) reliés de manière solidaire en rotation au premier élément d'entraînement en rotation (2) et mobiles axialement sous l'effet exercé par un fluide hydraulique le long d'une course de coulissement (a) entre respectivement deux positions finales (3, 3a, 4, 4a) sur le premier élément d'entraînement en rotation (2), dans lequel chaque piston annulaire (5, 6) présente deux dentures frontales (7, 7a) annulaires dirigées de manière à s'éloigner l'une de l'autre,
- un deuxième élément d'entraînement en rotation (8) avec des dentures annulaires (9, 9a, 9b, 9c) complémentaires par rapport aux dentures frontales (7, 7a) des pistons annulaires (5, 6), dans lequel les dentures frontales (7, 7a) des pistons annulaires (5, 6) peuvent être amenées en prise et peuvent être dégagées de la prise avec les dentures annulaires (9, 9a, 9b, 9c) associées du deuxième élément d'entraînement en rotation (8) par des déplacements des pistons annulaires (5, 6) sur le premier élément d'entraînement en rotation (2), ce qui permet de produire un déplacement en rotation du deuxième élément d'entraînement en rotation (8) par rapport au premier élément d'entraînement en rotation (2), et
- une unité de commande (14), qui commande l'effet exercé par les pistons annulaires (5, 6) avec le fluide hydraulique, dans lequel l'unité de commande (14) est mise au point pour entraîner un déplacement de va-et-vient des pistons annulaires (5, 6) sur l'arbre (2) conformément à un signal d'utilisation,
dans lequel le deuxième élément d'entraînement en rotation (8) est réalisé en tant que boîtier cylindrique, dans lequel les pistons annulaires (5, 6) sont mobiles axialement du fait de l'effet exercé par le fluide hydraulique le long d'une course de coulissement (a) entre les deux positions finales (3, 3a, 4, 4a) respectivement sur l'arbre (2),
**caractérisé par** un ensemble capteur (10, 11, 12, 17) relié à l'unité de commande (14), destiné à détecter les positions des pistons annulaires (5, 6) le long de la course de coulissement (a) respective, dans lequel l'unité de commande (14) régule la vitesse des pistons annulaires (5, 6) en fonction des signaux de l'ensemble capteur (10, 11, 12, 15, 17).

2. Manipulateur de grande taille (100) selon la revendication 1, **caractérisé en ce que** l'ensemble capteur (10) est réalisé pour détecter les positions des pistons annulaires (5, 6) lorsque la position finale (3, 3a, 4, 4a) respective est atteinte.

3. Manipulateur de grande taille (100) selon la revendication 1 ou 2, **caractérisé en ce que** l'ensemble capteur (10) comprend au moins un commutateur (11), qui commute lorsqu'une position prédéfinie du piston annulaire (5, 6) respectif est atteinte.

4. Manipulateur de grande taille (100) selon la revendication 3, **caractérisé en ce que** le commutateur (11) est réalisé en tant que commutateur de position finale à commutation par induction.

5. Manipulateur de grande taille (100) selon l'une quelconque des revendications 1 à 4, **caractérisé en ce que** l'ensemble capteur (10) comprend au moins un capteur de déplacement (12, 15, 17), qui détecte la position instantanée d'au moins un piston annulaire (5, 6) le long de la course de coulissement (a).

6. Manipulateur de grande taille (100) selon la revendication 5, **caractérisé en ce que** le capteur de déplacement (12, 15) est réalisé de manière à effectuer des détections inductives.

7. Manipulateur de grande taille (100) selon la revendication 5, **caractérisé en ce que** le capteur de déplacement (12, 15) est réalisé de manière à effectuer des détections capacitives.

8. Manipulateur de grande taille (100) selon la revendication 7, **caractérisé en ce que** le capteur de déplacement (12) présente une électrode annulaire (13) isolée par rapport au boîtier cylindrique (8), dans laquelle s'enfonce au moins une section (16) du piston annulaire (5, 6) détecté par le capteur de course (12) lors d'un déplacement par coulissement le long de la course de coulissement (a) à diverses profondeurs.

9. Manipulateur de grande taille (100) selon la revendication 5, **caractérisé en ce que** le capteur de course (17) comprend une jauge de contrainte, qui fournit un signal dépendant de la position instantanée de l'au moins un piston annulaire (5, 6) le long de la course de coulissement (a).

10. Manipulateur de grande taille (100) selon l'une quelconque des revendications 5 à 9, **caractérisé en ce que** le capteur de course (15, 17) est disposé à l'extérieur d'un élément d'entraînement en rotation (8) extérieur.

11. Manipulateur de grande taille (100) selon la revendication 10, **caractérisé en ce que** le capteur de course (15, 17) de l'ensemble capteur (10) est disposé dans un boîtier supplémentaire (18), lequel est disposé sur le côté extérieur (19) de l'élément d'entraînement en rotation (8) extérieur.

12. Manipulateur de grande taille (100) selon la revendication 10 ou 11, **caractérisé en ce que** le capteur de course (15, 17) détecte par l'intermédiaire d'une tige de palpage (20) la position instantanée de l'au moins un piston annulaire (5, 6) le long de la course de coulissement (a) dans l'élément d'entraînement en rotation extérieur (8), dans lequel la tige de palpage (20) est guidée dans l'élément d'entraînement en rotation (8) extérieur par un passage traversant (21).

13. Manipulateur de grande taille (100) selon la revendication 12, **caractérisé en ce que** la tige de palpage (20) se trouve en prise avec l'au moins un piston annulaire (5, 6).

14. Pompe à béton automotrice (200) avec un manipulateur de grande taille (100) selon l'une quelconque des revendications précédentes supportant un conduit de refoulement de béton (201).
